# EUROPÄISCHE PATENTANMELDUNG

(11) **EP 1 363 201 A2**
(43) Veröffentlichungstag der Anmeldung: **19.11.2003**
(21) Anmeldenummer: 02028529.2
(22) Anmeldetag: 19.12.2002
(51) Int. Cl.: G06F 17/30

(54) **Verfahren zur Generierung von Seiten in einer Auszeichnungssprache zur Auswahl von Produkten und Softwaretool**

(30) Priorität: 13.05.2002 DE 10221178
(71) Anmelder: SIEMENS AKTIENGESELLSCHAFT, 80333 München (DE)
(72) Erfinder: Bischoff, Toni Gerhard, 91580 Petersaurach (DE)

(57) **Zusammenfassung**

Verfahren zur Generierung von Seiten in einer Auszeichnungssprache zur Auswahl von Produkten und Softwaretool

Die Erfindung betrifft ein Softwaretool zur Auswahl von Produkten und ein Verfahren zur Generierung von Seiten in einer Auszeichnungssprache zur Auswahl von Produkten mit folgenden Schritten:
- Eingabe von Attributgruppen (2) in eine Datenbank (1),
- Eingabe von Attributen (3) in die Datenbank, wobei jedes Attribut einer der Attributgruppen zugeordnet ist,
- Eingabe von Produktinformationen (4) in die Datenbank, wobei jede Produktinformation zumindest einem der Attribute zugeordnet wird,
- Erzeugung einer Seite (41; 51) in der Auszeichnungssprache für jede der Attributgruppen, wobei auf der zu einer Attributgruppe gehörigen Seite Repräsentationen von den der betreffenden Attributgruppe zugeordneten Attributen und Eingabefelder zur Spezifizierung der Attribute durch einen Benutzer erzeugt werden,
- Speicherung der Seiten in der Auszeichnungssprache für den Zugriff mit einem Browserprogramm (57).

## Beschreibung

Die Erfindung betrifft ein Verfahren zur Generierung von Seiten in einer Auszeichnungssprache zur Auswahl von Produkten und ein Softwaretool, insbesondere für Offline- und Online-Plattformen für die Kundeninformation und den Einkauf von Produkten.

Aus dem Stand der Technik sind verschiedene Produktinformationssysteme und Handelsplattformen, insbesondere auch für den Zugriff über das Internet, bekannt. Solche Plattformen werden gleichermaßen für Konsumgüter und für Investitionsgüter verwendet.

Durch die ständig wachsenden und immer schnelllebigeren Produktpaletten wird es für Käufer und Verkäufer zunehmend schwerer das für die jeweiligen Anforderungen passende Produkt zu finden. Hier können Auswahlhilfen und Konfiguratoren eine Hilfestellung bieten, auch um die Notwendigkeit einer technischen Beratung vor und nach dem Kauf durch Fachberater zu reduzieren.

Nachteilig bei vorbekannten Auswahlhilfen und Konfiguratoren ist jedoch der Aufwand für die Erstellung von entsprechenden Datenbanken, die zusätzlich zu den Datenbanken für Kataloge, Malls und Handbücher erstellt und gepflegt werden müssen. Dieser doppelte Aufwand für die Datenpflege erzeugt Zusatzkosten, verzögert die Aktualität und verursacht zusätzliche Fehlerquellen durch Doppelteingaben.

Ein weiterer Nachteil von aus dem Stand der Technik bekannten Auswahlhilfen und Konfiguratoren ist, dass das "Look and Feel" der entsprechenden Web-Seiten jeweils durch spezifische Layouts den Firmenrichtlinien, das heißt der sogenannten "Corporate Identity" angepasst werden muss. Auch dies ist mit einem erheblichen Aufwand verbunden.

Der Erfindung liegt daher die Aufgabe zu Grunde ein verbessertes Verfahren zur Generierung von Seiten in einer Auszeichnungssprache zur Auswahl von Produkten und ein verbessertes Softwaretool zu schaffen.

Die der Erfindung zu Grunde liegende Aufgabe wird durch die Merkmale der unabhängigen Patentansprüche jeweils gelöst. Bevorzugte Ausführungsformen der Erfindung sind in den abhängigen Patentansprüchen angegeben.

Die Erfindung ermöglicht eine effiziente Erstellung und Pflege einer Datenbank zur Speicherung von produktbezogenen Informationen. Die Datenbank beinhaltet Attributgruppen und den Attributgruppen zugeordnete Attribute von Produkten. Beispielsweise wird jede Attributgruppe durch eine "Karteikarte" grafisch symbolisiert.

Beispielsweise können die folgenden Attributgruppen zur Auswahl von Produkten aus dem Bereich Automatisierungstechnik vorhanden sein: Display, Kommunikation, Funktionen, Eingänge, Ausgänge, Tastenart, Prozessor, Betriebssystem, Speicherausbau, Versorgungsspannung, Schnittstellen, Peripherie, Temperaturbereiche, Zertifikate, Applikationen, Resistenz, Passwortschutz, Archivierung, Diagnose, Sprachen und / oder weitere Attributgruppen.

Jeder dieser Attributgruppen sind bestimmte Attribute zugeordnet, die zu einer Spezifizierung des von dem Kunden gewünschten Produktprofils dienen. Beispielsweise sind der Attributgruppe "Display" die Attribute: Grafikdisplay, Größe (Höhe, Breite), Farben, Permanentfenster und Zeichenhöhe zugeordnet.

Den Attributen sind ferner Produktinformationen zugeordnet, das heißt eine Liste von Produkten, die das betreffende Attribut aufweisen.

Nach einer bevorzugten Ausführungsform der Erfindung sind den Attributen Formatinformationen zugeordnet. Dabei kann es sich beispielsweise um Steuerzeichen handeln, die angeben, ob es sich bei einem Attribut um Daten im Format Bool, Integer, Gleitpunkt oder Aufzählung handelt. Jedem der Steuerzeichen ist vorzugsweise ein graphisches Eingabesymbol zugeordnet.

Beispielsweise ist dem Format Bool ein sogenannter Radio-Button zugeordnet, durch dessen Betätigung eine Ja / Nein Auswahl eingegeben werden kann. Für ein Attribut in dem Format Integer oder Gleitpunkt wird ein Wertefeld ohne Vorgabe angezeigt. Für ein Attribut des Formats Aufzählung wird ein Pop-Up oder ein Pull-Down Menü mit einer Liste von zur Verfügung stehenden Instanzen des betreffenden Attributs angezeigt.

Nach einer bevorzugten Ausführungsform der Erfindung ist jeder Attributgruppe eine Grafik zugeordnet. Ferner sind auch den Attributen Grafiken zugeordnet.

Die Erzeugung einer Seite in einer Auszeichnungssprache für eine der Attributgruppen erfolgt beispielsweise so, dass in der linken Spalte der Seite eine Liste der Bezeichnungen der zu der Attributgruppe der Seite gehörenden Attribute generiert wird und dass den Bezeichnungen der Attribute zugeordnete Eingabefelder entsprechend den Attributformatsteuerzeichen generiert werden. Ferner wird auf einer solchen Seite die der Attributgruppe zugeordnete Grafik ausgegeben.

Zu denjenigen Attributen der betreffenden Attributgruppe, zu denen weitere Grafiken vorhanden sind, werden Hyperlinks auf der Seite erzeugt. Durch Anklicken eines solchen Hyperlinks wird dann die entsprechende Grafik in Form einer separaten Seite ausgegeben.

Nach einer weiteren bevorzugten Ausführungsform der Erfindung erfolgt die Eingabe der Spezifizierung der Attribute des vom Kunden gewünschten Produktprofils durch Auswahl eines bestimmten Produkts. Es erfolgt dann ein Zugriff auf die Datenbank, um die dem Produkt zugeordnete Attributinformation abzufragen. Diese Attributinformation stellt das Suchprofil zur Suche nach entsprechenden Produkten dar.

Im Weiteren werden bevorzugte Ausführungsformen der Erfindung mit Bezugnahme auf die Zeichnungen näher erläutert. Es zeigen:
- Figur 1: ein Blockdiagramm einer Datenbank zur Speicherung von Attributgruppen und Attributen für Produkte,
- Figur 2: ein Blockdiagramm eines Computerprogramms zur erfindungsgemäßen Erzeugung von Seiten in einer Auszeichnungssprache,
- Figur 3: ein Flussdiagramm zur Veranschaulichung der Arbeitsweise des Computerprogramms der Figur 2,
- Figur 4: ein Blockdiagramm einer ersten Ausführungsform eines erfindungsgemäßen Softwaretools,
- Figur 5: ein Blockdiagramm einer zweiten Ausführungsform eines erfindungsgemäßen Softwaretools,
- Figur 6: eine HTML-Seite mit Karteikarten für Attributgruppen, z.B. "Display",
- Figur 7: ein Auswahlbildschirm für die Auswahl von Attributgruppen,
- Figur 8: eine HTML-Seite für die Darstellung der Auslastung eines gewählten Produkts mit Bezug auf das spezifizierte Produktprofil,
- Figur 9: eine HTML-Seite mit einer Darstellung der Überforderung des gewählten Produkts mit Bezug auf das spezifizierte Produktprofil.

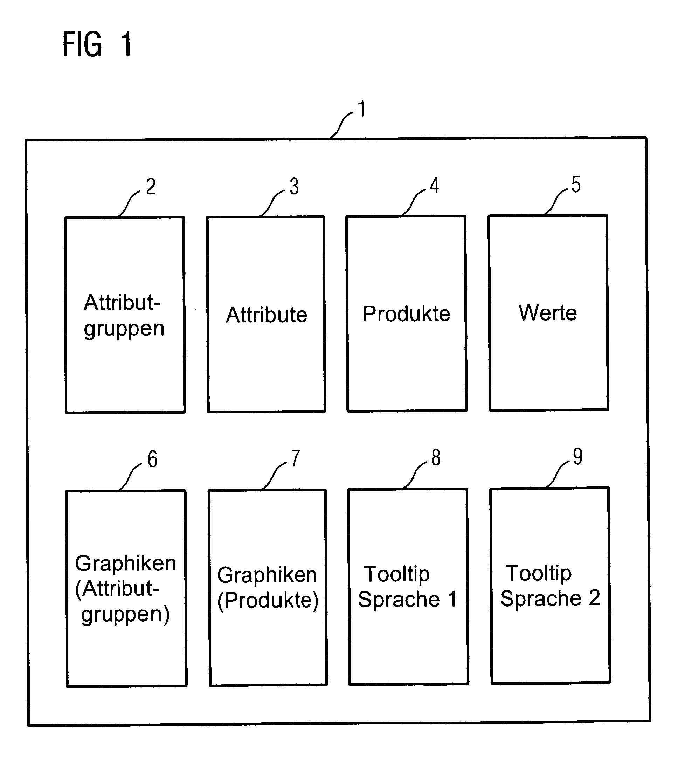

Die Figur 1 zeigt eine Datenbank 1 mit einer Datenbankliste 2 für Attributgruppen. Die Datenbank 1 hat ferner eine Datenbankliste 3 zur Speicherung von Attributen, die jeweils einer der Attributgruppen, die in der Datenbankliste 2 gespeichert sind, zugeordnet sind.

Für die Attributgruppe "Display" handelt es sich bei diesen zugeordneten Attributen der Datenbankliste 2 beispielweise um die Attribute "Grafikdisplay", "Größe", "Höhe", "Breite", "Farben", "Farbenanzahl", "Permanentfenster" und "Zeichenhöhe". Vorzugsweise sind diesen Attributen jeweils Steuerzeichen mit Formatinformation für die entsprechenden Eingabefelder zugeordnet.

Die Datenbank 1 beinhaltet ferner eine Datenbankliste 4 zur Speicherung von Produktinformationen, das heißt einer Liste der verfügbaren Produkte. Jedes der Produkte ist einem oder mehreren der Attribute in der Datenbankliste 3 der relationalen Datenbank zugeordnet.

Alternativ werden die Informationen der Datenbanklisten 2 bis 9 in einer Tabelle abgelegt, die entsprechende Datenfelder für die zu speichernden Informationen beinhaltet.

Ferner ist eine Datenbankliste 5 für die Speicherung von Attributwerten der Produkte der Datenbankliste 4 in der Datenbank 1 vorhanden.

Die Datenbanklisten 6 und 7 dienen zur Speicherung von Grafiken der Attributsgruppen bzw. von Produktgrafiken, die einzelnen Attributen zugeordnet sind.

Die Datenbanklisten 8 und 9 dienen zur Speicherung von sogenannten Tooltips in unterschiedlichen Sprachen.

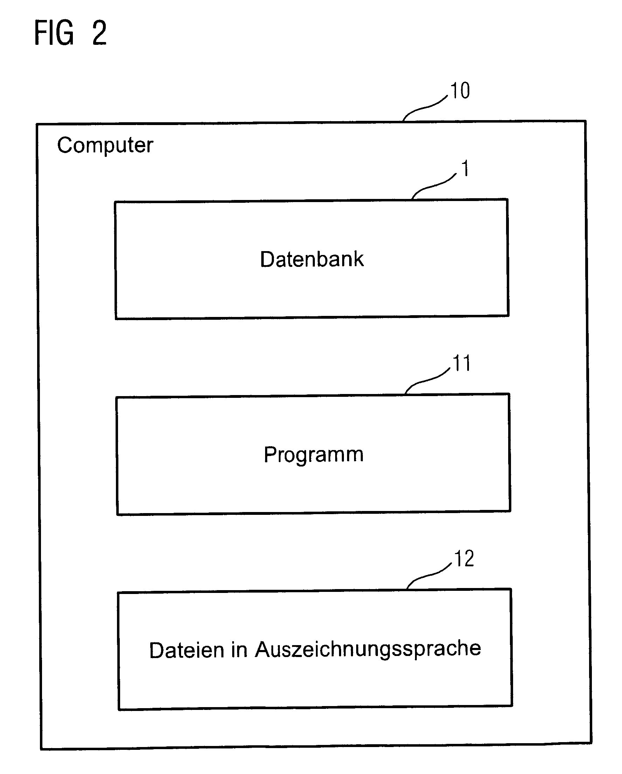

Die Figur 2 zeigt ein Blockdiagramm eines Computers 10, in dem die Datenbank 1 der Figur 1 gespeichert ist. Der Computer 10 beinhaltet ferner ein Programm 11 und einen Speicher 12. Das Programm 11 dient zum Zugriff auf die Datenbank 1, um für jede der Attributgruppen eine Seite in einer Auszeichnungssprache, wie zum Beispiel HTML oder XML, zu erzeugen.

Dabei wird für jede der Attributgruppen eine separate Seite generiert, wobei die einzelnen Seiten prinzipiell gleich aufgebaut sind. Jede Seite beinhaltet eine Auflistung der Attribute, die der betreffenden Attributgruppe zugeordnet sind, sowie Eingabefelder zur Spezifizierung der Attribute.

Durch die Eingabe von Attributspezifikationen kann ein Benutzer ein Produktprofil definieren. Ferner können in jede der Seiten Grafiken und / oder Hyperlinks nach einem standardisierten Layout eingebunden werden. Die resultierenden Seiten werden in dem Speicher 12 des Computers 10 abgelegt.

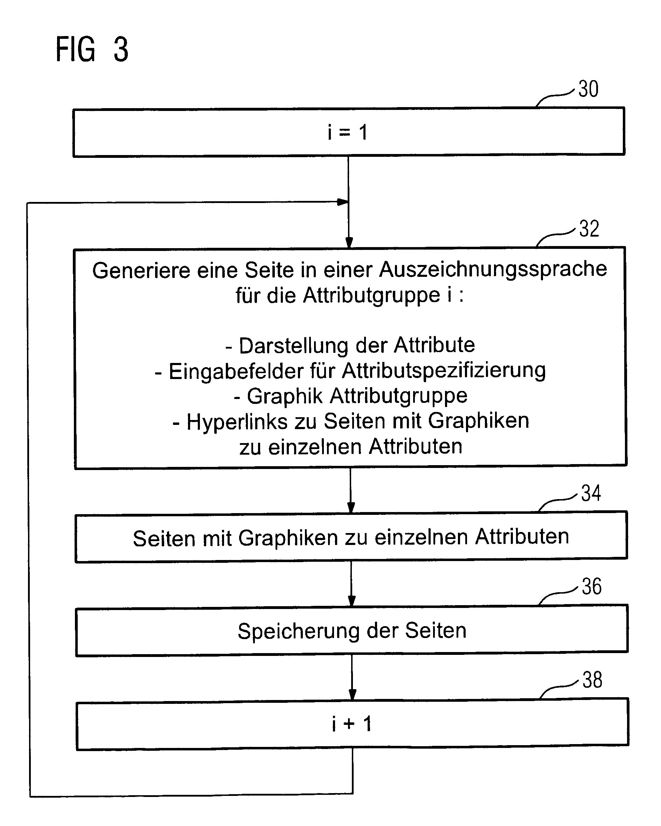

Die Figur 3 zeigt ein entsprechendes Flussdiagramm.

In dem Schritt 30 wird der Index i auf 1 initialisiert. In dem Schritt 32 wird eine Seite in eine Auszeichnungssprache für die Attributgruppe i generiert. Dies erfolgt so, dass eine Darstellung der Attribute auf der Seite, zum Beispiel in Form von Text generiert wird, sowie Eingabefelder für die Attributspezifizierung. Die Art der Eingabefelder ergibt sich dabei aus den Attributen zugeordneten Formatinformationen. Ferner kann in die Seite eine zu der Attributgruppe gehörige Grafik sowie Hyperlinks zu weiteren Grafiken, die zum Beispiel den einzelnen Attributen zugeordnet sind, eingebunden werden.

In dem Schritt 34 werden die Seiten mit den einzelnen Attributen zugeordneten Grafiken generiert. In dem Schritt 36 werden die in dem Schritt 32 und in dem Schritt 34 generierten Seiten gespeichert. Danach wird der Index i um 1 inkrementiert. Die Schritte 32 bis 36 werden dann für die verschiedenen Attributgruppen i solange wiederholt, bis sämtliche Attributgruppen, die in der entsprechenden Datenbankliste (vgl. Datenbankliste 2 der Figur 1) gespeichert sind, abgearbeitet worden sind.

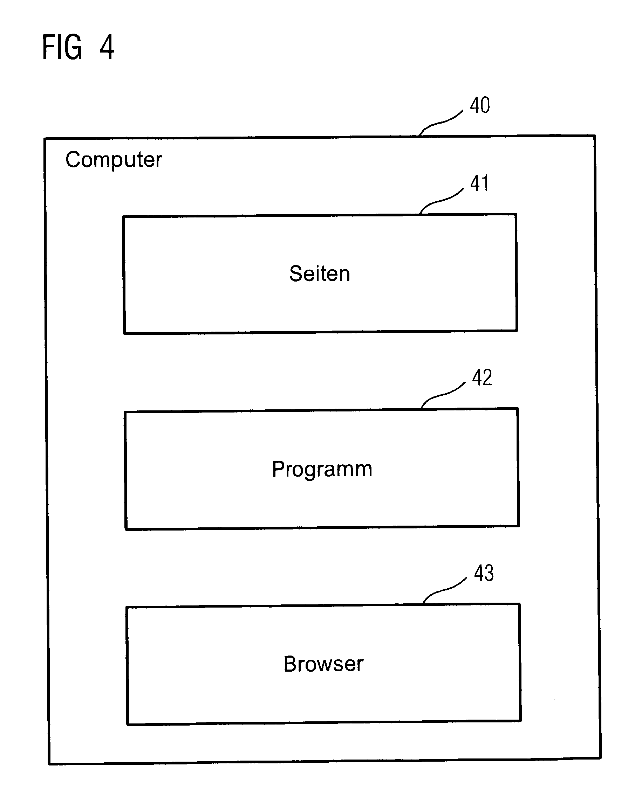

Die Figur 4 zeigt einen Computer 40 mit einem Speicher 41, in den die zuvor mittels des Computers 10 (vgl. Figur 2) generierten Seiten geladen worden sind. Der Computer 40 hat ferner ein Programm 42 und einen Browser 43, der zur Anzeige der Seiten in der Auszeichnungssprache ausgebildet ist.

Bei dem Programm 42 kann es sich beispielsweise um ein sogenanntes Plug-In, insbesondere ein Java Applet, für den Browser 43 handeln. Über den Browser 43 kann ein Nutzer die in dem Speicher 41 gespeicherten Seiten aufrufen und anzeigen lassen. Der Nutzer kann dann in einen oder mehreren der Seiten Attributspezifikationen in Attribut-Eingabefeldern eingeben, um ein Produktprofil für ein gewünschtes Produkt zu definieren. Das Programm 42 beinhaltet eine Recherchefunktion, um ein oder mehrere Produkte zu ermitteln, die dem Produkt-Profil entsprechen.

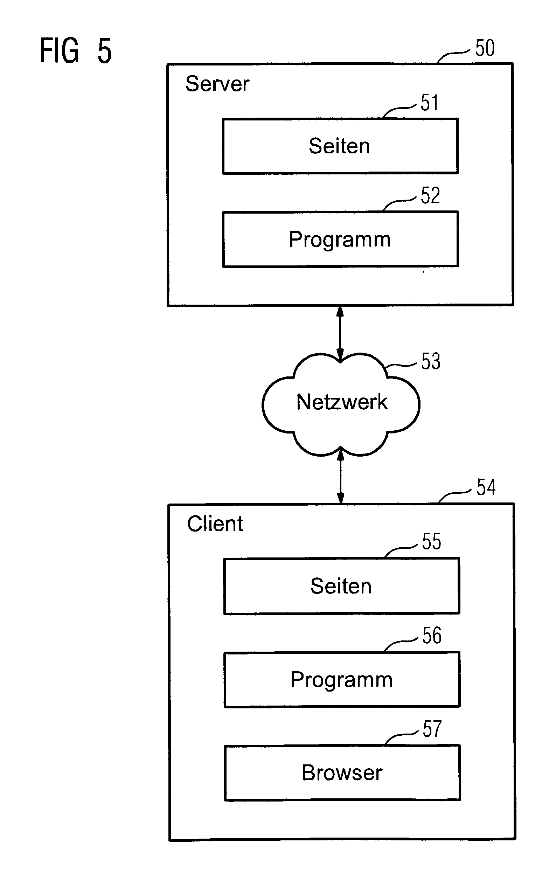

Die Figur 5 zeigt eine alternative Ausführungsform zur Online Realisierung zum Beispiel über das Internet.

Auf einem Servercomputer 50 sind die zuvor generierten Seiten in der Auszeichnungssprache in einem Speicher 51 abgelegt. Auf dem Server 50 befindet sich ferner ein Programm 52 zur Generierung dieser Seiten entsprechend dem Programm 11 in der Ausführungsform der Figur 2.

Über ein Netzwerk 53, zum Beispiel das Internet, kann ein Client-Computer 54 die Seiten aus dem Speicher 51 des Servers 50 in dessen Speicher 55 laden. Der Client 54 hat ferner ein Programm 56, dessen Funktionalität dem Programm 42 der Ausführungsform der Figur 4 entspricht, sowie einen Browser 57.

Nach dem Laden von einer oder mehreren der Seiten von dem Server 50 auf den Client 54 werden diese mittels des Browsers 57 angezeigt und der Nutzer kann das gewünschte Produktprofil über die entsprechenden Eingabefelder eingeben.

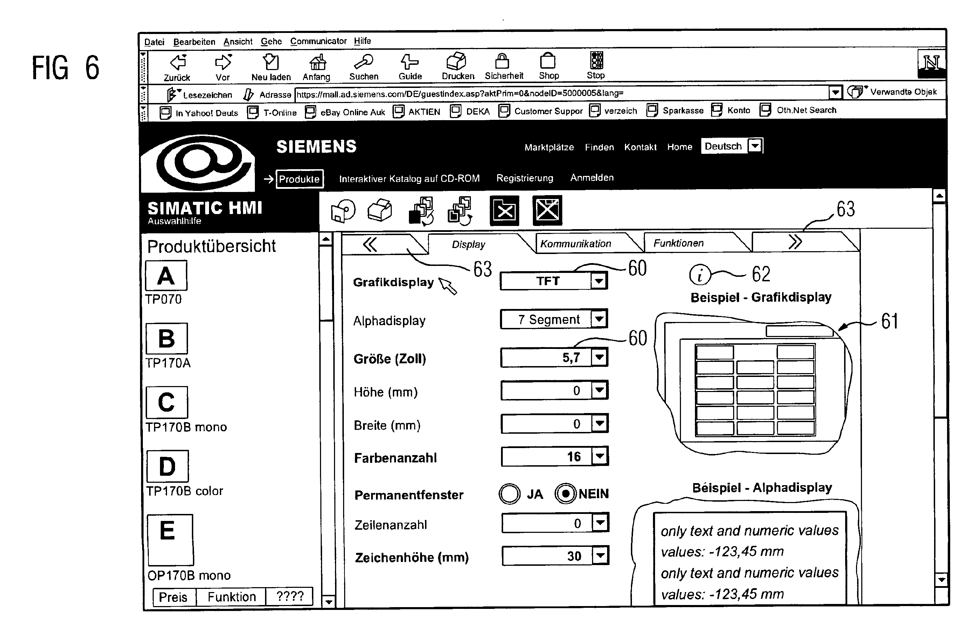

Die Figur 6 zeigt ein Beispiel für eine Seite in einer Auszeichnungssprache, die für die Attributgruppe "Display" generiert worden ist. Auf dieser Seite sind die Attribute "Grafikdisplay", "Größe (Zoll)", "Höhe (mm)", "Breite (mm)", "Farben", "Permanentfenster" und "Zeichenhöhe (mm)" textuell in einer Spalte angegeben.

Neben dieser Spalte mit der Angabe der Bezeichnungen der Attribute befindet sich eine weitere Spalte mit Eingabefeldern 60. Das Format der Eingabefelder 60 wird durch entsprechende Steuerzeichen, die den Attributen in der Datenbank zugeordnet sind, festgelegt. In dem Ausführungsbeispiel der Figur 6 handelt es sich bei den Eingabefeldern 60 entweder um Pull-Down Menüs oder um ein Eingabefeld vom Typ Bool, das heißt zur Eingabe einer "Ja" oder "Nein" Entscheidung.

Auf der Seite befindet sich ferner eine Grafik 61, die der Attributgruppe "Display" zugeordnet ist. Dem Einzelattribut "Grafikdisplay" ist ferner über einen Hyperlink 62 eine weitere Grafik zugeordnet. Durch Anklicken des Hyperlinks 62 wird die entsprechende Seite aufgerufen.

Unter "Produktübersicht" am linken Rand der Seite befindet sich eine Auflistung der verfügbaren Produkte A bis E.

Zur Auswahl eines bestimmten Produkts kann ein Benutzer seine Spezifikation des gewünschten Produkts über ein oder mehrere der Eingabefelder 60 eingeben. Diejenigen verfügbaren Produkte A bis E, die dieser Spezifikation nicht entsprechen, werden unter "Produktübersicht" gegraut ("gegrayed") dargestellt.

Durch Anklicken auf "Kommunikation" oder "Funktionen" gelangt der Benutzer auf entsprechende andere Seiten für die Attributgruppe "Kommunikation" bzw. "Funktionen". Auf den betreffenden Webseiten kann der Benutzer weitere Spezifikationen eingeben.

Die "Produktübersicht" bleibt dabei auch auf diesen weiteren Seiten erhalten. Dabei werden diejenigen Produkte gegraut dargestellt, die nicht die vom Benutzer insgesamt auf den verschiedenen Seiten eingegebenen Spezifikationen erfüllen.

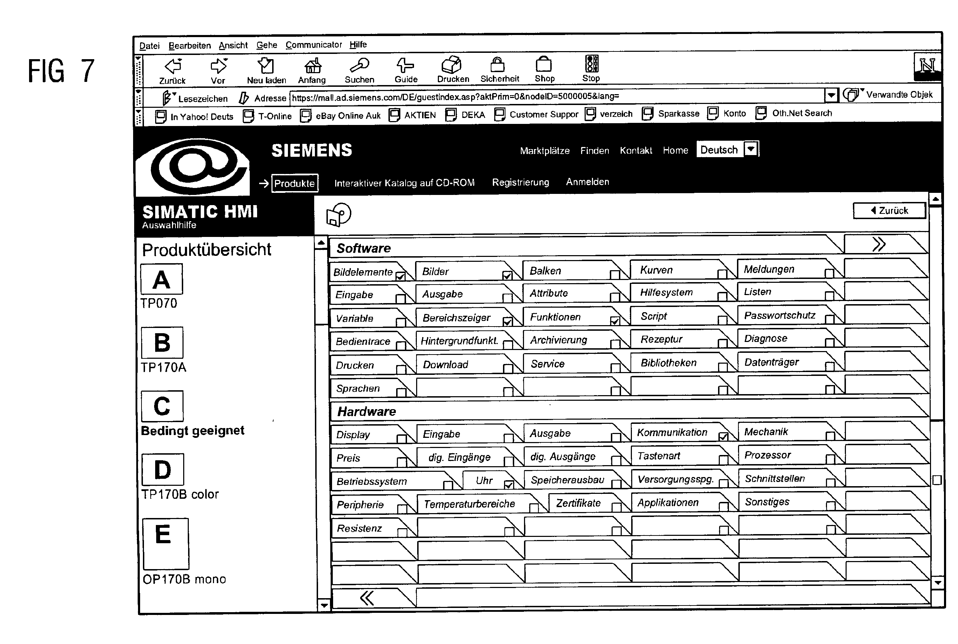

Durch Anklicken der Symbole 63 gelangt der Benutzer auf die in der Figur 7 dargestellte Webseite. Auf dieser Webseite ist ein Überblick über die insgesamt zur Verfügung stehenden Attributgruppen dargestellt, und zwar getrennt nach Software und Hardware bezogenen Attributgruppen.

Durch Ankreuzen bzw. Deaktivieren der vom Benutzer gewünschten Attributgruppen kann die Webseite der Figur 6 an die Nutzerbedürfnisse angepasst werden, das heißt es werden auf den "Karteikartenreitern" der Figur 6 die vom Nutzer in der Seite der Figur 7 gewünschten Attributgruppen textuell dargestellt, sodass der Nutzer durch Anklicken schnell auf die entsprechende einer Attributgruppe zugeordnete Seite zugreifen kann.

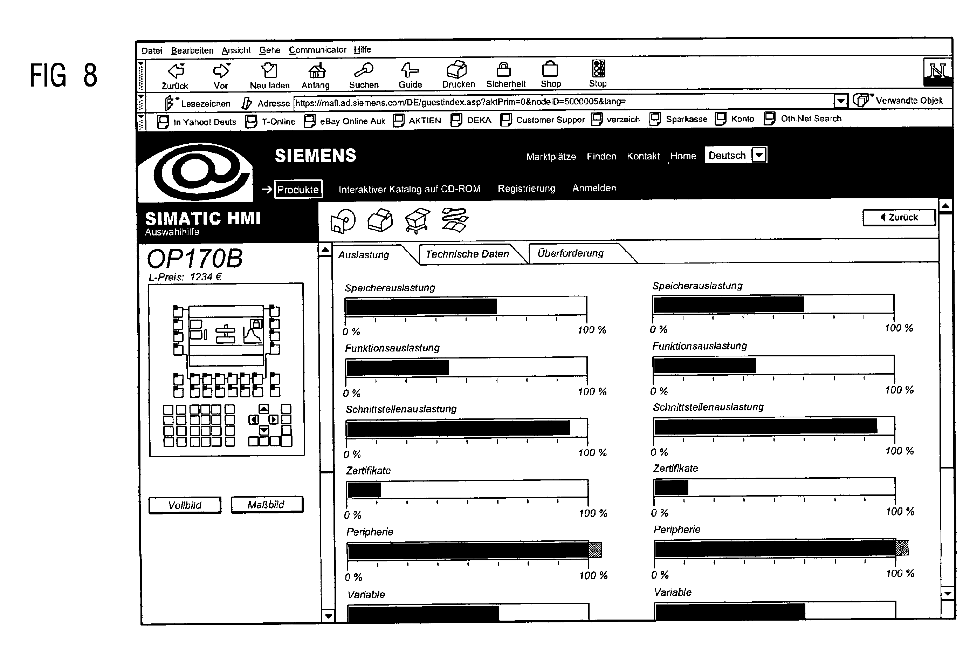

Durch Anklicken eines der Produkte unter "Produktübersicht" kann der Benutzer zu einer in der Figur 8 gezeigten Seite gelangen, die die Auslastung des ausgewählten Produkts mit Bezug auf die Nutzerspezifikation darstellt. Hierbei wird eine Nutzervorgabe, wie zum Beispiel der benötigte Speicherplatz mit dem entsprechenden Attribut des Produkts, das heißt dem tatsächlich vorhandenen Speicherplatz verglichen und die entsprechende Speicherauslastung in einem Balkendiagramm als Prozentangabe angezeigt. Dabei sind auch Prozentangaben von über 100 % möglich, nämlich dann, wenn der Benutzer ein gegrautes Produkt ausgewählt hat.

Von besonderem Vorteil ist hierbei, dass dem Nutzer die Auslastung des gewählten Produkts bei Beanspruchung gemäss dem vom Nutzer spezifizieren Profil graphisch angezeigt wird. Darauf basierend kann der Nutzer abschätzen, ob ausreichende Leistungsreserven des Produkts für voraussehbare zukünftige Anforderungen vorhanden sind.

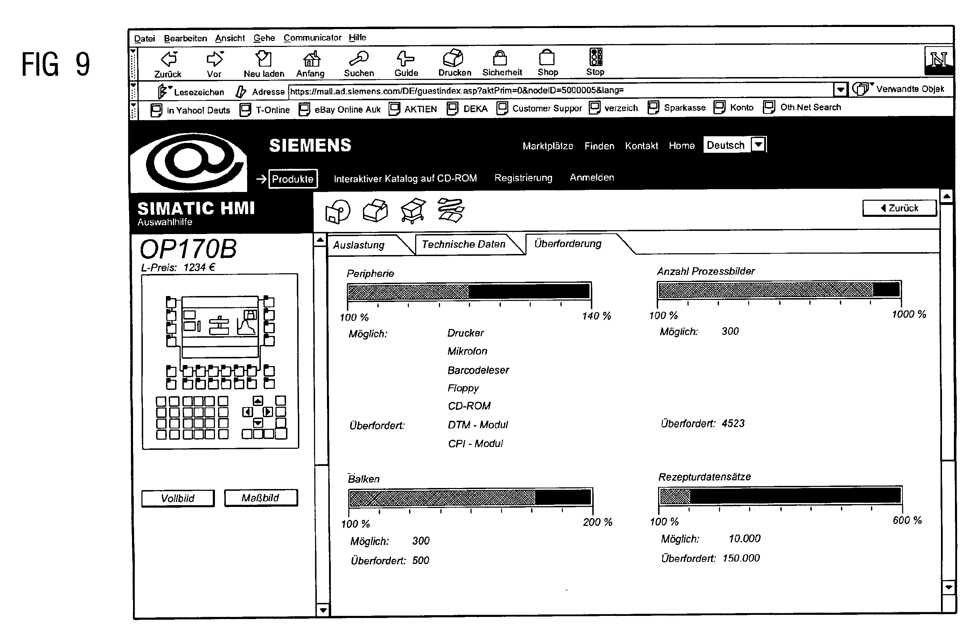

Durch Anklicken auf "Überforderung" auf der Seite der Figur 8 gelangt der Benutzer zu der Seite der Figur 9, wo das Maß der Überforderung des gewählten Produkts mit Bezug auf diejenigen Attribute, die von dem Produkt nicht erfüllt werden können, gezeigt ist.

Zur Eingabe einer Spezifikation, das heißt des gewünschten Produktprofils, hat der Nutzer auch die Möglichkeit ein bestimmtes Produkt auszuwählen und Vergleichsprodukte zu diesem Produkt durch das erfindungsgemäße Softwaretool suchen zu lassen. Hierzu werden die Attribute des vom Nutzer ausgewählten Produkts aus der Datenbank gelesen und als Spezifikation definiert, das heißt es werden diejenigen Produkte gesucht, die mindestens die Attributeigenschaften des ausgewählten Produkts erfüllen. Diese Produkte werden dem Benutzer dann zur Auswahl angeboten.

## Patentansprüche

1. Verfahren zur Generierung von Seiten in einer Auszeichnungssprache zur Auswahl von Produkten mit folgenden Schritten:
- Eingabe von Attributgruppen (2) in eine Datenbank (1),
- Eingabe von Attributen (3) in die Datenbank, wobei jedes Attribut einer der Attributgruppen zugeordnet ist,
- Eingabe von Produktinformationen (4) in die Datenbank, wobei jede Produktinformation zumindest einem der Attribute zugeordnet wird,
- Erzeugung einer Seite (41; 51) in der Auszeichnungssprache für jede der Attributgruppen, wobei auf der zu einer Attributgruppe gehörigen Seite Repräsentationen von den der betreffenden Attributgruppe zugeordneten Attributen und Eingabefelder zur Spezifizierung der Attribute durch einen Benutzer erzeugt werden,
- Speicherung der Seiten in der Auszeichnungssprache für den Zugriff mit einem Browserprogramm (57).

2. Verfahren nach Anspruch 1, wobei jedem der Attribute eine Formatinformation zugeordnet ist, wobei die Formatinformation vorzugsweise zumindest Angaben hinsichtlich der möglichen Formate Überschrift, Bool, Integer, Gleitpunkt, Liste beinhaltet, und wobei zumindest einigen der Attribute weitere Informationen zugeordnet sind, wie z.B. Tooltips, erklärende Graphiken und/oder Einheiten.

3. Verfahren nach Anspruch 1 oder 2 mit folgenden weiteren Schritten:
- Eingabe von Grafiken (6) in die Datenbank für die Attributgruppen, insbesondere als graphische Tooltips,
- Eingabe von Grafiken (7) in die Datenbank für die Produktinformationen.

4. Verfahren nach Anspruch 1, 2 oder 3, mit folgenden weiteren Schritten:
- Eingabe von Hilfetexten (8) in einer ersten Sprache in die Datenbank,
- Eingabe von Hilfetexten in zumindest einer zweiten Sprache (9) in die Datenbank, wobei die Hilfetexte jeweils einem Attribut und / oder einem Eingabefeld zugeordnet sind.

5. Verfahren nach einem der vorhergehenden Ansprüche 1 bis 4, wobei es sich bei der Datenbank um eine relationale Datenbank handelt.

6. Softwaretool zur Auswahl von Produkten mit
- Seiten (41; 51) in einer Auszeichnungssprache, wobei jede der Seiten zu einer Attributgruppe (2) gehört, und auf der betreffenden Seite Repräsentationen von der Attributgruppe der Seite zugeordneten Attributen (3) und Eingabefelder zur Spezifizierung der Attribute vorhanden sind,
- einem Programmmodul (42; 56) zur Anzeige und / oder Recherche und / oder Auswertung der Seiten in der Auszeichnungssprache unter Verwendung eines Browserprogramms (43).

7. Softwaretool nach Anspruch 6, mit einer Darstellung von Repräsentationen von Produkten auf den Seiten, wobei die Darstellung von Repräsentationen der Produkte für diejenigen Produkte, die einem von einem Benutzer spezifiziertem Rechercheprofil nicht entsprechend, gegraut erfolgt.

8. Softwaretool nach Anspruch 6 oder 7 mit Programmmitteln zur Auswahl der Repräsentation eines der Produkte, wobei für ein ausgewähltes Produkt, dessen Auslastung mit Bezug auf die vom Benutzer spezifizierten Produkteigenschaften berechnet wird und eine grafische Darstellung der Auslastung in der Auszeichnungssprache erzeugt wird.

9. Softwaretool nach Anspruch 6, 7, oder 8 mit Programmmittel zur Berechnung der Überforderung eines ausgewählten Produkts welches einer vom Benutzer eingegebenen Spezifikation nicht entspricht, und zur Generierung von einer Seite in der Auszeichnungssprache zur grafischen Darstellung der Überforderung.

10. Softwaretool nach einem der vorhergehenden Ansprüche 6 bis 9, wobei die Spezifizierung der Attribute durch die Auswahl der Repräsentation eines Produkts erfolgt, in dem die dem ausgewählten Produkt zugeordneten Attribute als Spezifizierung von gesuchten Produkten verwendet werden.

11. Softwaretool nach einem der vorhergehenden Ansprüche 6 bis 10, wobei es sich bei dem Programmmodul um ein Plug-In für das Browserprogramm handelt.
